# EUROPÄISCHE PATENTSCHRIFT

(11) **EP 1 173 694 B1**
(45) Veröffentlichungstag und Bekanntmachung des Hinweises auf die Patenterteilung: **27.08.2003**
(21) Anmeldenummer: 00927023.2
(22) Anmeldetag: 22.04.2000
(51) Int. Cl.: F16H 61/12

(54) **NOTFAHREINRICHTUNG FÜR KRAFTFAHRZEUGE**
EMERGENCY DRIVING DEVICE FOR MOTOR VEHICLES
DISPOSITIF DE CONDUITE DE SECOURS POUR VEHICULES AUTOMOBILES

(30) Priorität: 29.04.1999 DE 19919537
(43) Veröffentlichungstag der Anmeldung: 23.01.2002
(73) Patentinhaber: ZF FRIEDRICHSHAFEN Aktiengesellschaft, 88038 Friedrichshafen (DE)
(72) Erfinder: PETZOLD, Rainer, D-88045 Friedrichshafen (DE)
(86) Internationale Anmeldenummer: EP0003655
(87) Internationale Veröffentlichungsnummer: WO00066917

(56) Entgegenhaltungen:
- EP-A- 0 380 214
- DE-A- 3 940 590
- US-A- 5 676 620
- US-A- 5 790 969
- PATENT ABSTRACTS OF JAPAN vol. 1999, no. 04, 30. April 1999 (1999-04-30) & JP 11 006559 A (JIDOSHA KIKI CO LTD), 12. Januar 1999 (1999-01-12)

## Beschreibung

Die Erfindung betrifft eine Notfahreinrichtung für Kraftfahrzeuge nach dem Oberbegriff von Anspruch 1.

Automatisch schaltende Getriebe werden in Kraftfahrzeugen immer häufiger eingesetzt. Hierbei kann es sich um Getriebe mit stufenlos veränderbarer Übersetzung oder um Stufengetriebe handeln, die unter Last oder mit Zugkraftunterbrechung schaltbar sind. Dem Getriebe ist eine elektronische Steuereinheit zugeordnet, die in Abhängigkeit von Antriebs-, Fahr- und Getriebeparametern eine geeignete Übersetzung auswählt und aktiviert. Zusätzlich kann der Fahrer über einen Wählhebel und/oder Programmschalter eine Übersetzungsstufe oder eine Gruppe von Übersetzungsstufen oder Fahrprogramme auswählen.

Die Steuerung und Regelung des Getriebes ist abhängig und wird beeinflußt von der Regelung weiterer Systeme des Fahrzeugs, z.B. einer Antriebsmaschine, einer Betriebsbremse und einer Dauerbremse. Diese Systeme verfügen in der Regel über eigene elektronische Steuereinheiten, die über Datenbusse untereinander und mit der elektronischen Steuereinheit des Getriebes verbunden sind und Daten austauschen. Solche Datenbusse werden als CAN-Busse (Controller Area Network) ausgebildet.

Für den Fall, daß die Getriebesteuerung wegen eines Defektes in der Elektronik ausfällt, werden in der Regel Notfahreinrichtungen vorgesehen, mit denen es möglich ist, das Fahrzeug mit einem eingeschränkten Fahrbetrieb von der Straße wegzufahren oder sogar bis zur nächsten Reparaturwerkstatt zu bringen. Ein solcher Defekt kann unter anderem in einem Ausfall eines CAN-Busses oder dessen Schnittstelle liegen.

Aus der EP 0 431 538 B1 ist eine Notfahreinrichtung bekannt, bei der im Notfall über ein besonderes Magnetventil eine vorbestimmte Übersetzungsstufe eingelegt werden kann. Das Ventil wird mittels einer Schraube manuell betätigt, wobei gewisse logische Kreise der normalen Getriebesteuerung in der zentralen Steuereinheit während der Notschaltung deaktiviert werden.

Aus der EP 0 380 214 A2 ist ferner eine Notfahreinrichtung bekannt, die es dem Fahrer ermöglicht, im Notfall einen Vorwärts- und eine Rückwärtsübersetzungsstufe der normalerweise verfügbaren Übersetzungsstufen zu wählen, wenn die übliche elektronische Steuereinheit oder das Verteilerkabel ausgefallen ist. Vorausgesetzt ist allerdings, daß der Schaltaktuator noch funktionsfähig ist.

Der Fahrbetrieb ist bei den bekannten Notfahreinrichtungen sehr eingeschränkt, da für die Vorwärts- und Rückwärtsfahrt jeweils nur ein Gang zur Verfügung steht und dieser in der Regel im Stillstand des Fahrzeugs geschaltet werden muß.

Schließlich ist aus der US 5,676,620 eine Steuerung für ein Kraftfahrzeug gemäß dem Oberbegriff des Anspruchs 1 bekannt, die eine Notfalleinrichtung aufweist, durch die bei einer Störung des Kommunikationskanals eine Übersetzungswechseleinrichtung auf den Empfang von Steuersignalen von einer Einrichtung, die mit ihr nicht über den Kommunikationskanal verbunden ist, umgeschaltet wird. Die Einrichtung, die dann diese Steuersignale abgibt, ist die gleiche (Wählhebel, Programm-Wählschalter und Kickdown-Schalter) wie im normalen Betrieb, nur der Übertragungsweg ist ein anderer. Funktionalitäten, die beim Schalten eines vielgängigen Getriebes notwendig sind, lassen sich damit nur unzureichend abbilden.

Der Erfindung liegt die Aufgabe zugrunde, bei Defekten an einem CAN-Bus oder entsprechenden Schnittstellen eine Weiterfahrt mit Schalten in mehreren Gängen zu ermöglichen. Sie wird gemäß der Erfindung durch die Merkmale des Anspruchs 1 gelöst. Weitere Ausgestaltungen ergeben sich aus den Unteransprüchen.

Nach der Erfindung ist die dem Getriebe zugeordnete Steuereinheit mit einem zusätzlichen elektronischen Bedienteil verbunden. Bei einem Defekt des Wählhebels oder seinen Signalleitungen zu der elektronischen Steuereinheit sowie der Anschlüsse und CAN-Busse kann die Steuerung des Getriebes über das Bedienteil manuell erfolgen. Wird das Bedienteil betätigt, wird die Schnittstelle des Wählhebels an der elektronischen Steuereinheit unterbrochen, solange das zusätzliche Bedienteil aktiv ist. Es ist jedoch auch möglich, um Kollisionen in der Steuerung zu vermeiden, das zusätzliche Bedienteil erst dann zu aktivieren, wenn die dem Getriebe zugeordnete Steuereinheit einen entsprechenden Fehler feststellt.

Das Bedienteil besitzt zweckmäßigerweise die für die Schaltung notwendigen Schaltfunktionen, und zwar Ein/Aus, Neutral, Vorwärts, Rückwärts, Kupplung auf, Kupplung zu, Hochschalten und Herunterschalten. Mit Hilfe eines solchen Bedienteils können, wenn auch mit erhöhter Aufmerksamkeit des Fahrers, alle verfügbaren Gänge geschaltet werden. Es ist dadurch möglich, auch längere Strecken zu einer Fachwerkstatt zurückzulegen oder die Heimreise aus einem Ausland durchzuführen.

Es bestehen grundsätzlich zwei Möglichkeiten, die dem Getriebe zugeordnete oder im Getriebe integrierte Steuereinheit mit Steuereinheiten weiterer Systeme des Fahrzeugs zu verbinden, und zwar durch einen separaten, getriebespezifischen CAN-Bus, der neben einem fahrzeugspezifischen CAN-Bus vorgesehen ist, oder durch einen einzigen gemeinsamen fahrzeugspezifischen CAN-Bus, der mit einer zentralen elektronischen Steuereinheit zusammenwirkt. Fällt nur der getriebespezifische CAN-Bus aus, kann die dem Getriebe zugeordnete Steuereinheit über das Bedienteil angesteuert werden und die Schaltungen laufen in der üblichen Weise automatisch ab. Ist jedoch der fahrzeugspezifische CAN-Bus defekt, kann nur manuell über das Bedienteil geschaltet werden. Hierzu besitzt das Bedienteil eine Reihe von Schaltfunktionen, die der Fahrer betätigen kann. Dabei nutzt er in üblicher Weise die Informationen eines Anzeigegeräts für den Schaltzustand des Getriebes, sowie die eines Drehzahlmessers der Antriebsmaschine und eines Tachometers.

Das Bedienteil kann ständig mit der zugeordneten Steuereinheit verbunden sein. Um seine Verfügbarkeit und Funktionsfähigkeit im Notfall zu gewährleisten, ist es jedoch zweckmäßig, es lösbar mit der Steuereinheit zu verbinden, so daß es im Normalfall an einem sicheren Ort des Fahrzeugs aufbewahrt werden kann und nur im Notfall benutzt wird. In vorteilhafter Weise wird es gegen Staub und Feuchtigkeit geschützt in eine Folie eingeschweißt und bei den Serviceunterlagen oder den Bordwerkzeugen des Fahrzeugs aufgehoben.

Damit der Anschluß für das Bedienteil bei einer regelmäßigen Diagnose geprüft wird, ist es zweckmäßig, den Anschluß mit einem abnehmbaren Adapter zu versehen, solange das Bedienteil nicht angeschlossen ist.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: einen schematischen Aufbau einer erfindungs-gemäßen Notfahreinrichtung und
- Fig. 2: eine Variante zu Fig. 1.

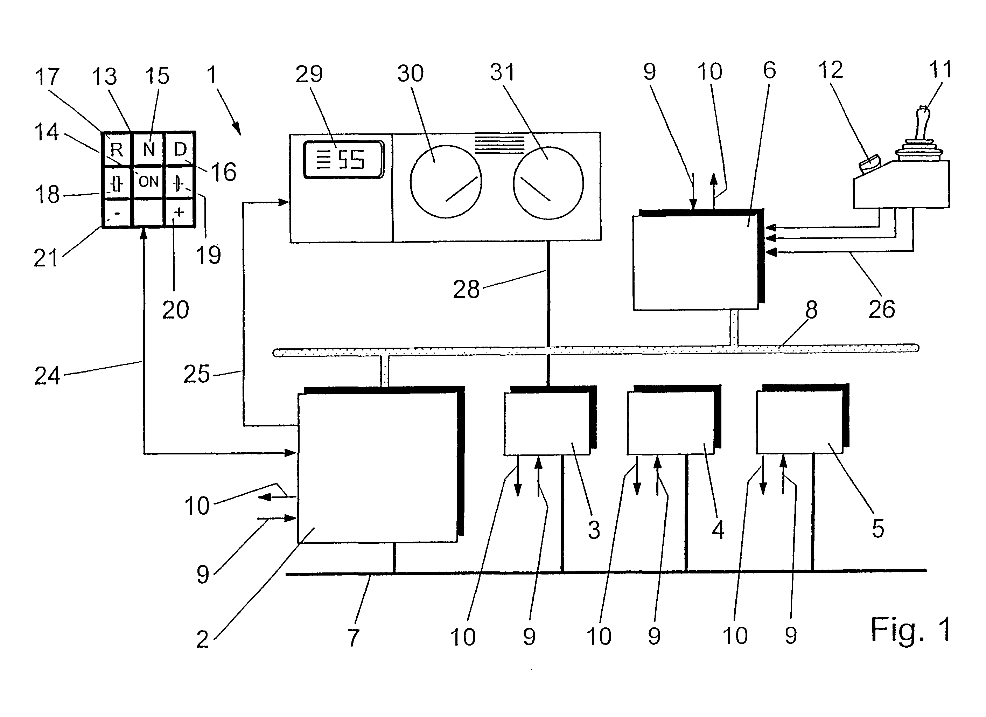

Die Notfahreinrichtung 1 für ein automatisch gesteuertes Getriebe umfaßt im wesentlichen eine elektronische Steuereinheit 2, die dem Getriebe zugeordnet ist und ein zusätzliches Bedienteil 13, das über eine Signalleitung 24 mit der Steuereinheit 2 verbunden ist. Die Steuereinheit 2 nach Fig. 1 ist einerseits über einen getriebespezifischen CAN-Bus 8 mit einer Steuereinheit 6 verbunden, die über Signalleitungen ihrerseits mit einem Wählhebel 11 und einem Programmschalter 12 verbunden ist. Ein weiterer fahrzeugspezifischer CAN-Bus 7 verbindet die Steuereinheit 2 mit einer elektronischen Steuereinheit 3 für eine nicht näher dargestellte Antriebsmaschine und eine Steuereinheit 4 für eine nicht näher dargestellte Betriebsbremse und eine Steuereinheit 5 für eine Dauerbremse. Die Steuereinheiten 2, 3, 4, 5, 6 tauschen Daten zur Regelung der ihnen zugeordneten Systeme über die CAN-Busse 7 und 8 aus. Die Steuereinheiten 2, 3, 4, 5, 6 besitzen ferner Eingänge 9 für Regel- und Steuerparameter und Ausgänge 10 zu Aktuatoren oder dergleichen.

Fallen der getriebespezifische CAN-Bus 8 oder einer seiner Schnittstellen oder die Signalleitungen 26 oder der Wählhebel 11 aus, kann die Steuereinheit 2 über das Bedienteil 13 angesteuert werden. Bei aktivem Bedienteil 13 sind die Fahrschaltersignale über die Schnittstelle des CAN-Busses 8 an der Steuereinheit 2 blockiert, so daß nur die Ansteuerung über das Bedienteil 13 wirksam ist. Das Bedienteil 13 besitzt eine Schaltfunktion 14 zum Aktivieren und Deaktivieren, eine Schaltfunktion 15 zum Ansteuern der Neutralstellung, Schaltpositionen 16 und 17 für die Vorwärtsfahrt und Rückwärtsfahrt, Schaltfunktionen 20 und 21 für das Heraufschalten und Herunterschalten um einen Gang je Betätigung sowie Schaltfunktionen 18 und 19 zum Öffnen und Schließen einer nicht dargestellten Hauptkupplung. Die jeweilige Schaltsituation des Getriebes wird von der Steuereinheit 2 über eine Signalleitung 25 an einem Anzeigegerät 29 angezeigt.

Fällt auch der CAN-Bus 7 bzw. seine Schnittstelle zur Steuereinheit 2 aus, kann der Fahrer das Getriebe über das Bedienteil 13 im Sinne eines normalen Schaltgetriebes schalten. Die Moment- und Drehzahlbeeinflussung der Antriebsmaschine während der Schaltung übernimmt der Fahrer mit dem Gaspedal. Bei Betätigung der Tasten 20 oder 21 wird zunächst die Hauptkupplung geöffnet und dann der Gang ausgeschaltet. Beim Heraufschalten wartet der Fahrer solange, bis die Drehzahl der Antriebsmaschine dem gewünschten Gang bei der jeweils an einem Tachometer 31 angezeigten Fahrgeschwindigkeit des Fahrzeugs entspricht. Die Drehzahl wird von einem Drehzahlmesser 30 angezeigt, der über eine Signalleitung 28 mit der Steuereinheit 3 für die Antriebsmaschine verbunden ist. Ist die Drehzahl der Antriebsmaschine erreicht und der Fahrer läßt die jeweils betätigte Taste los, wird der gewünschte Gang geschaltet und die Hauptkupplung geschlossen. Beim Herunterschalten wird die Drehzahl der Antriebsmaschine der entsprechenden Fahrgeschwindigkeit und der gewünschten Übersetzungsstufe dadurch angepaßt, daß die Antriebsmaschine durch Gasgeben beschleunigt wird.

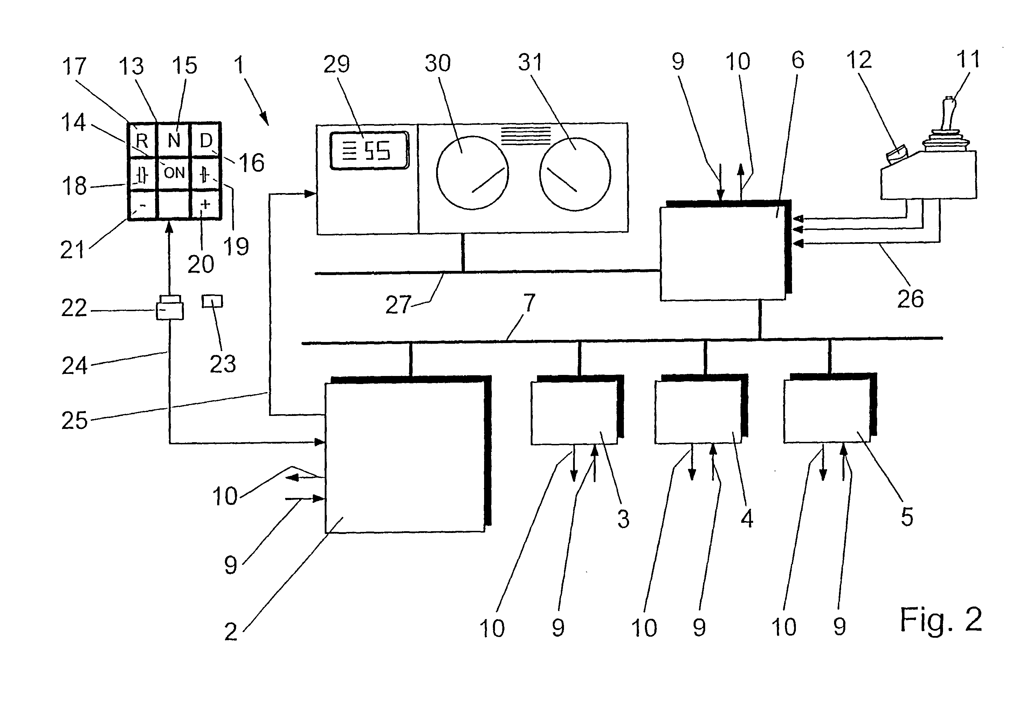

Die Ausführung nach Fig. 2 unterscheidet sich von der Ausführung nach Fig. 1 vor allem dadurch, daß der getriebespezifische CAN-Bus 8 entfällt und alle Steuereinheiten 2, 3, 4, 5, 6 über einen gemeinsamen CAN-Bus 7 miteinander verbunden sind. Die Steuereinheit 6 übernimmt als zentrale Steuereinheit eine koordinierende Funktion. Im Störfall des CAN-Busses 7 kann das Bedienteil 13 die Steuereinheit 2, die dem Getriebe zugeordnet ist, wie ein normales Schaltgetriebe ansteuern. Der Drehzahlmesser 30 ist dabei hier über eine Signalleitung 27 mit der Steuereinheit 6 verbunden.

Die Ausführung nach Fig. 2 zeigt ferner einen Stekker 22, so daß das Bedienteil 13 von der dem Getriebe zugeordneten Steuereinheit 2 getrennt werden kann. Es kann dann geschützt in einer verschweißten Folie an einem sicheren Ort des Fahrzeugs, z.B. bei den Serviceunterlagen oder bei dem Bordwerkzeug aufgehoben werden. Ist das Bedienteil 13 nicht angeschlossen, wird auf den Anschluß ein Adapter 23 gesteckt. Dadurch kann bei der Diagnose des Elektroniksystems die Funktionsfähigkeit der Anschlußleitung und des Anschlusses überprüft werden, so daß er im Notfall funktionsfähig ist. Die dem Getriebe zugeordnete Steuereinheit 2 wird zweckmäßigerweise unmittelbar am Getriebe angebracht oder in die hydraulische oder pneumatische Steuerung des Getriebes integriert. Dadurch entfallen störanfällige Verbindung zwischen der Elektronik und den hydraulischen oder pneumatischen Steuerelementen.

Bei den bisher bekannten Notschalt- bzw. Notfahrkonzepten wird bei Notfahrbetrieb die Normalfunktionalität im Steuergerät inklusive der Störfallreaktionen nicht in vollem Umfang genutzt. Nach der Erfindung wird der volle Funktionsumfang im Steuergerät genutzt und nur für die fehlende Schnittstelle Ersatzfunktionen realisiert.

### Bezugszeichen

- 1: Notfahreinrichtung
- 2: Steuereinheit
- 3: Steuereinheit
- 4: Steuereinheit
- 5: Steuereinheit
- 6: Steuereinheit
- 7: CAN-Bus
- 8: CAN-Bus
- 9: Eingang
- 10: Ausgang
- 11: Wählhebel
- 12: Programmschalter
- 13: Bedienteil
- 14: Eingabetaste
- 15: Eingabetaste
- 16: Eingabetaste
- 17: Eingabetaste
- 18: Eingabetaste
- 19: Eingabetaste
- 20: Eingabetaste
- 21: Eingabetaste
- 22: Stecker
- 23: Adapter
- 24: Signalleitung
- 25: Signalleitung
- 26: Signalleitung
- 27: Signalleitung
- 28: Signalleitung

- 29: Anzeigegerät
- 30: Drehzahlmesser
- 31: Tachometer

## Patentansprüche

1. Notfahreinrichtung (1) für Kraftfahrzeuge mit einem automatisch schaltenden Getriebe, das eine im Getriebe integrierte, elektronische Steuereinheit (2) hat, die über mindestens einen CAN-Bus (7, 8) mit weiteren elektronischen Steuereinheiten (3, 4, 5, 6) und wenigstens einen Wählhebel (11) verbunden ist und Mess- und Regeldaten austauscht, **dadurch gekennzeichnet, dass** die Steuereinheit (2) mit einem zusätzlichen elektronischen Bedienteil (13) lösbar verbunden ist, über das manuell die Schaltfunktionen Ein/Aus (14), Neutral (15), Vorwärts (16), Rückwärts (17), Kupplung auf (18), Kupplung zu (19), Hochschalten (20) und Herunterschalten (21) schaltbar sind.

2. Notfahreinrichtung (1) nach Anspruch 1, **dadurch gekennzeichnet, dass** auf dem Stecker (22) während des Normalbetriebs ein Adapter (23) gesteckt ist, der die Diagnose des Bedienteilanschlusses ermöglicht.

3. Notfahreinrichtung (1) nach Anspruch 1 oder 2, **dadurch gekennzeichnet, dass** die im Getriebe integrierte Steuereinheit (2) über einen fahrzeugspezifischen CAN-Bus (7) mit einer Steuereinheit (3) für eine Antriebsmaschine, einer Steuereinheit (4) für ein Betriebsbremssystem und einer Steuereinheit (5) für ein Dauerbremssystem verbunden ist und über einen eigenen CAN-Bus (8) mit einer Steuereinheit (6) des Wählhebels (11) für die Auswahl einer Gangstufe und/oder eines Schalters (12) für den Betriebsmodus des Getriebes verbunden ist.

4. Notfahreinrichtung (1) nach Anspruch 1 oder 2, **dadurch gekennzeichnet, dass** die Steuereinheit (6) für den Wählhebel (11), die Steuereinheit (3) für die Antriebsmaschine, die Steuereinheit (4) für das Betriebsbremssystem und die Steuereinheit für das Dauerbremssystem über einen gemeinsamen CAN-Bus (8) mit der dem Getriebe zugeordneten Steuereinheit (2) verbunden ist.

5. Notfahreinrichtung (1) nach einem der Ansprüche 1 bis 4, **dadurch gekennzeichnet, dass** der Anschluß des Bedienteils (13) aktiviert wird, sobald die dem Getriebe zugeordnete Steuereinheit (2) den Ausfall eines CAN-Busses (7, 8) feststellt.

6. Notfahreinrichtung (1) nach einem der Ansprüche 1 bis 4, **dadurch gekennzeichnet, dass** die dem Getriebe zugeordnete Steuereinheit (2) die Signalleitung (6, 8) vom Wählhebel (11) zur dem Getriebe zugeordneten Steuereinheit (2) unterbricht, sobald das Bedienteil (13) betätigt wird.

## Claims

1. Limp-home device (1) for motor vehicles with an automatically shifting transmission, which has an electronic control unit (2) integrated in the transmission, which unit is connected via at least one CAN bus (7, 8) to further electronic control units (3, 4, 5, 6) and at least one selector lever (11) and exchanges measuring and control data, **characterized in that** the control unit (2) is connected detachably to an additional electronic actuator (13), via which the shifting functions on/off (14), neutral (15), forwards (16), backwards (17), clutch open (18), clutch closed (19), shift up (20) and shift down (21) can be shifted manually.

2. Limp-home device (1) according to claim 1, **characterized in that** during normal operation an adapter (23) is plugged into the plug (22), which adapter facilitates diagnosis of the actuator connection.

3. Limp-home device (1) according to claim 1 or 2, **characterized in that** the control unit (2) integrated in the transmission is connected via a vehicle-specific CAN bus (7) to a control unit (3) for a driving machine, a control unit (4) for a service brake system and a control unit (5) for a retarder system and is connected via a dedicated CAN bus (8) to a control unit (6) of the selector lever (11) for the selection of a gear stage and/or of a switch (12) for the operating mode of the transmission.

4. Limp-home device (1) according to claim 1 or 2, **characterized in that** the control unit (6) for the selector switch (11), the control unit (3) for the driving machine, the control unit (4) for the service brake system and the control unit for the retarder system is connected via a common CAN bus (8) to the control unit (2) assigned to the transmission.

5. Limp-home device (1) according to one of claims 1 to 4, **characterized in that** the connection of the actuator (13) is activated as soon as the control unit (2) assigned to the transmission detects the failure of a CAN bus (7, 8).

6. Limp-home device (1) according to one of claims 1 to 4, **characterized in that** the control unit (2) assigned to the transmission interrupts the signal lines (6, 8) from the selector lever (11) to the control unit (2) assigned to the transmission as soon as the actuator (13) is operated.

## Revendications

1. Dispositif de marche d'urgence (1) pour véhicules automobiles équipés d'une boîte de vitesses automatique dotée d'une unité de commande électronique (2) intégrée dans la boîte de vitesses qui est connectée au moins au moyen d'un Bus CAN (7, 8) avec d'autres unités de commande électroniques (3, 4, 5, 6) et avec au moins un sélecteur de marche (11) et qui échange des données de mesure et de réglage avec ces unités, **caractérisé en ce que** l'unité de commande électronique (2) est liée de façon amovible à un élément de commande électronique (13) supplémentaire, à l'aide duquel il est possible d'activer manuellement les fonctions de changement des vitesses : ON / OFF (14), Point mort (15), marche avant (16), marche arrière (17), ouvrir embrayage (18), fermer embrayage (19), monter vitesse (20) et descendre vitesse (21).

2. Dispositif de marche d'urgence (1) selon la revendication 1, **caractérisé en ce que** pendant la marche normale sur la prise (22) est branché un adaptateur (23) qui permet d'effectuer un diagnostic du raccord de l'élément de commande.

3. Dispositif de marche d'urgence (1) selon les revendications 1 ou 2, **caractérisé en ce que** l'unité de commande électronique (2) intégrée dans la boîte de vitesses est connectée - par l'intermédiaire d'un Bus CAN spécifique au véhicule (7) - avec une unité de commande (3) pour un moteur d'entraînement, une unité de commande (4) pour un système de frein de service et une unité de commande (5) pour un système de frein continu, et **en ce qu'**elle est connectée - par l'intermédiaire d'un propre Bus CAN (8) - avec une unité de commande (6) du sélecteur de marche (11) pour la sélection des rapports et/ou d'un interrupteur (12) pour la sélection du mode de service de la boîte de vitesses.

4. Dispositif de marche d'urgence (1) selon les revendications 1 ou 2, **caractérisé en ce que** l'unité de commande (6) pour le sélecteur de marche (11), l'unité de commande (3) pour le moteur d'enttaînement, l'unité de commande (4) pour le système de frein de service et l'unité de commande pour le système de frein continu sont connectées par l'intermédiaire d'un Bus CAN commun (8) avec l'unité de commande (2) associée à la boîte de vitesses.

5. Dispositif de marche d'urgence (1) selon une des revendications 1 à 4, **caractérisé en ce que** le raccord de l'élément de commande (13) est activé dès que l'unité de commande (2) associée à la boîte de vitesses détecte la défaillance d'un Bus CAN (7, 8).

6. Dispositif de marche d'urgence (1) selon une des revendications 1 à 4, **caractérisé en ce que** l'unité de commande (2) associée à la boîte de vitesses interrompe la ligne de transmission de signaux (6, 8) à partir du sélecteur de marche (11) et jusqu'à l'unité de commande (2) associée à la boîte de vitesses dès que l'élément de commande (13) est activé.
